Europäisches Patentamt

European Patent Office

Office européen des brevets

(19)

(11) Veröffentlichungsnummer: **0 015 424**
A1

(12) **EUROPÄISCHE PATENTANMELDUNG**

(21) Anmeldenummer: 80100761.8

(22) Anmeldetag: 14.02.80

(51) Int. Cl.³: **G 06 F 1/02,** H 03 K 4/00

(30) Priorität: 20.02.79 DE 2906471

(43) Veröffentlichungstag der Anmeldung: **17.09.80**
**Patentblatt 80/19**

(84) Benannte Vertragsstaaten: **AT CH FR GB IT LU NL SE**

(71) Anmelder: **SIEMENS AKTIENGESELLSCHAFT Berlin und München, Postfach 22 02 61,**
**D-8000 München 22 (DE)**

(72) Erfinder: **Markwitz, Wernhard, Dipl.-Ing., Thalkirchner Strasse 107, D-8000 München 70 (DE)**

(54) **Schaltungsanordnung zur sequentiellen Erzeugung der Funktionswerte mehrerer Schwingungen, deren Folgefrequenzen N-fache einer Grundschwingung sind.**

(57) Schaltungsanordnung zur sequentiellen Erzeugung der Funktionswerte (W) mehrerer Schwingungen, deren Folgefrequenzen N-fache einer Grundschwingung (SCH1) sind. Ein Zähler (Z) gibt periodisch p binär dargestellte Zählerstände (A) ab. Mit einem Generator (NG) werden Binärsignale (N) erzeugt, welche die Zahlen (N) signalisieren. Ein Multiplizierer (MU) multipliziert modulo p die Zählerstände (A) mit den Zahlen N und die sich ergebenden multiplikativen Signale (AN) dienen zur Adressierung eines Festwertspeichers (ROM), der die entsprechenden Funktionswerte (W) abgibt.

SIEMENS AKTIENGESELLSCHAFT
Berlin und München

Unser Zeichen
VPA  79 P 2 3 0 8 EUR

Schaltungsanordnung zur sequentiellen Erzeugung der Funktionswerte mehrerer Schwingungen, deren Folgefrequenzen N-fache einer Grundschwingung sind.

Die Erzeugung der Funktionswerte mehrerer Schwingungen - beispielsweise Sinusschwingungen - deren Folgefrequenzen Vielfache einer Grundschwingung sind, kann insbesondere dann einen erheblichen technischen Aufwand erfordern, wenn viele derartige Funktionswerte erzeugt werden müssen und wenn diese Funktionswerte mit digitalen Mitteln erzeugt werden sollen.

Der Erfindung liegt die Aufgabe zugrunde, die Funktionswerte derartiger Schwingungen auf digitale Weise und mit verhältnismäßig geringem technischen Aufwand zu erzeugen.

Die der Erfindung zugrundeliegende Aufgabe wird dadurch gelöst, daß einem Zähler Taktimpulse eines Taktgebers als Zählimpulse zugeführt werden und der Zähler periodisch eine Anzahl von p binär dargestellten Zählerständen abgibt, daß mit einem Generator Binärsignale erzeugt werden, welche

Wdb 1 Ram / 12.2.1979

die Zahlen N signalisieren, daß mit einem Multiplizierer multiplikative Signale erzeugt werden, die die Produkte der Zählerstände und der Zahlen N modulo p signalisieren, und daß einem Festwertspeicher die multiplikativen Signale als Adressen zugeführt werden und der Festwertspeicher die Funktionswerte entsprechend den Adressen abgibt.

Die erfindungsgemäße Schaltungsanordnung zeichnet sich einerseits durch ihre digitale Arbeitsweise aus und andererseits durch ihren geringen technischen Aufwand, insbesondere dann, wenn die Funktionswerte vieler Schwingungen erzeugt werden sollen.

Zum rationellen Betrieb des Zählers, des Multiplizierers und des Festwertspeichers ist es zweckmäßig, daß der Zähler pro Periode der Grundschwingung $p=2^m$ Zählerstände erzeugt, wobei die Zahl m eine positive ganze Zahl bedeutet, daß die Zählerstände mit je m Binärsignalen signalisiert werden, die je den einzelnen Binärstellen der Zählerstände zugeordnet sind und daß die Anzahl p mindestens gleich der Zahl 2N ist.

Zur Erzeugung der Funktionswerte mehrerer Sinusschwingungen, deren Frequenzen das N-fache einer Sinusgrundschwingung sind, ist es zweckmäßig, daß mit dem Multiplizierer multiplikative Signale erzeugt werden, die Produkte der m-1 niederwertigeren Binärstellen Zählerstände und der Zahl N signalisieren und daß die Polarität der vom Festwertspeicher abgegebenen Funktionswerte mit Hilfe der höchsten Binärstelle des multiplikativen Signals festgelegt wird.

Zur Erzeugung der Funktionswerte sehr vieler Sinusschwingungen, deren Frequenzen das N-fache einer Sinusgrundschwingung sind, ist es zweckmäßig, daß die multiplikativen Signale des Multiplizierers - die die Produkte der niederwertigeren m-2 Binärstellen der Zählerstände und der Zahl signalisieren - einerseits einer ersten Serie von Eingängen einer Schaltungsanordnung und andererseits einer Komplementärstufe zugeführt werden, daß die Komplementärstufe Signale an eine zweite Serie von Eingängen der Schaltanordnung abgibt, welche das Komplement der eingangs zugeführten Signale in bezug auf jenen Zählerstand signalisiert, der einem der Scheitelwerte der Sinusgrundschwingung zugeordnet ist, daß das Binärsignal der m-1-ten Binärstelle des multiplikativen Signals der Schaltanordnung als Steuersignal zugeführt ist und die leitende Verbindung der ersten bzw. zweiten Eingänge mit einer dritten Serie von Ausgängen bewirkt, daß die dritte Serie von Ausgängen der Schaltanordnung an den Festwertspeicher angeschlossen ist und daß die Polarität der vom Festwertspeicher abgegebenen Funktionswerte mit Hilfe der höchsten Binärstelle des multiplikativen Signals festgelegt wird.

Im folgenden werden Ausführungsbeispiele der Erfindung anhand der Figuren 1 bis 7 beschrieben, wobei in mehreren Figuren dargestellte gleiche Gegenstände mit gleichen Bezugszeichen bezeichnet sind.

Es zeigen:

Fig. 1 eine Schaltungsanordnung zur sequentiellen Erzeugung der Funktionswerte mehrerer Schwingungen, wobei der Festwertspeicher alle Funktionswerte einer Periode der Grundschwingung speichert,

Fig. 2 mehrere Sinusschwingungen und zugeordnete Signale,

Fig. 3 eine Schaltungsanordnung zur sequentiellen Erzeugung der Funktionswerte mehrerer Schwingungen, wobei der Festwertspeicher nur die Funktionswerte einer Sinushalbwelle speichert,

Fig. 4 eine Sinusgrundschwingung,

Fig. 5 eine Schaltungsanordnung zur sequentiellen Erzeugung der Funktionswerte mehrerer Schwingungen, wobei der Festwertspeicher nur die Funktionswerte einer Viertelperiode speichert,

Fig. 6 und 7 mehrere Möglichkeiten der sequentiellen Folge der Funktionswerte.

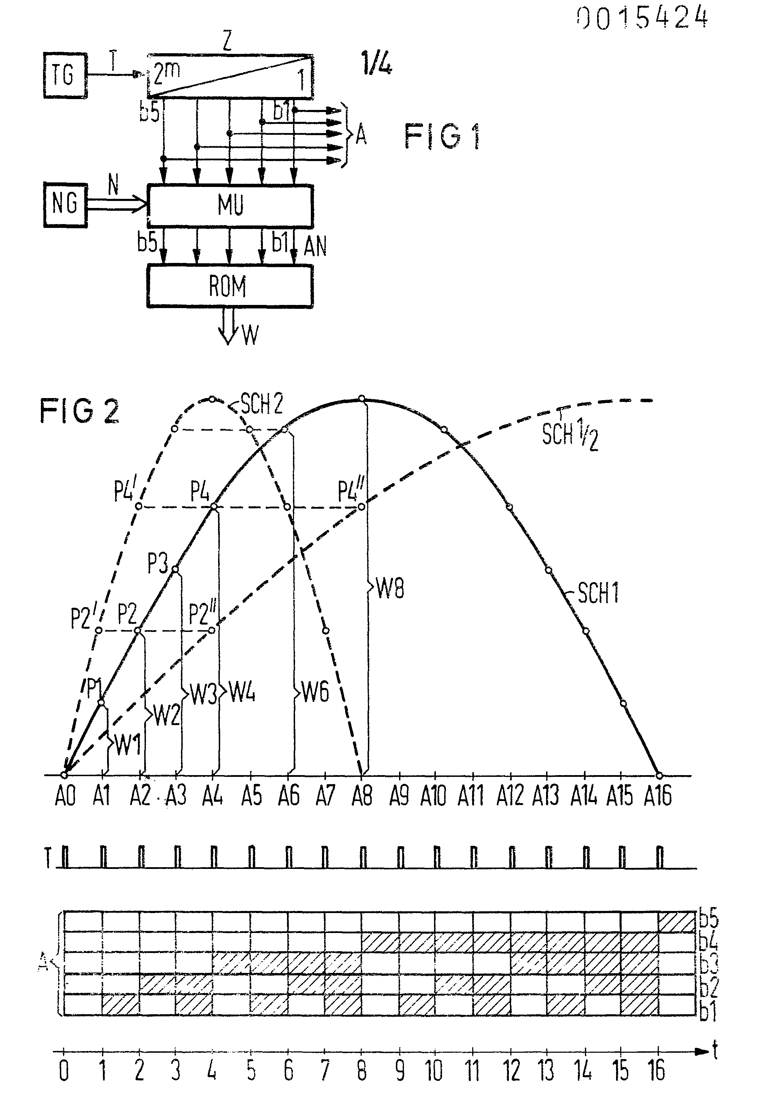

Fig. 1 zeigt den Taktgeber TG, den Zähler Z, den Generator NG, den Multiplizierer MU und den Festwertspeicher ROM. Die vom Taktgeber TG erzeugten Taktimpulse T sind in Fig. 2 dargestellt und werden als Zählimpulse dem Zähler Z zugeführt. Nach insgesamt $p=2^m$ Zählimpulsen wird der Zähler wieder in seinen Anfangszustand zurückgesetzt. Über die fünf Ausgänge des Zählers werden Binärsignale abgegeben, welche insgesamt die Zählerstände A signalisieren, die ebenfalls in Fig. 2 dargestellt sind. Bei diesem Ausführungsbeispiel wurde mit $m=5$ angenommen, daß der Zähler von 0 bis 31 zählt und somit pro Periode der Grundschwingung SCH1 $p=2^m=32$ Zählerstände A abgibt.

In Fig. 2 sind die 0-Werte der Zählerstände A durch weiße Rechtecke und die 1-Werte der Zählerstände durch schwarze Rechtecke dargestellt. Zur Zeit $t=0$ wird nach einem Taktimpuls T der Zählerstand A0=00000 abgegeben. Zur Zeit $t=1$ ergibt sich der Zählerstand A1=00001. Dabei ist die niederwertigste Stelle mit b1 bezeichnet und die höchstwertigste Stelle mit b5. Dazwischen liegen die Stellen b2, b3 und b4.

Der Generator NG erzeugt die Binärsignale N, die insgesamt die Zahl N darstellen. Es wird zunächst angenommen, daß die Zahl $N=1$ ist. Der Multiplizierer MU multipliziert die Zählerstände A mit der Zahl N modulo p und gibt über seine Ausgänge das multiplikative Signal AN ab. Mit $N=1$ gleichen die multiplikativen Signale AN den Zählerständen A. Diese multiplikativen Signale AN werden dem Festwertspeicher ROM als Adressen eingegeben. Der Festwertspeicher gibt über seine Ausgänge die entsprechenden Funktionswerte W ab.

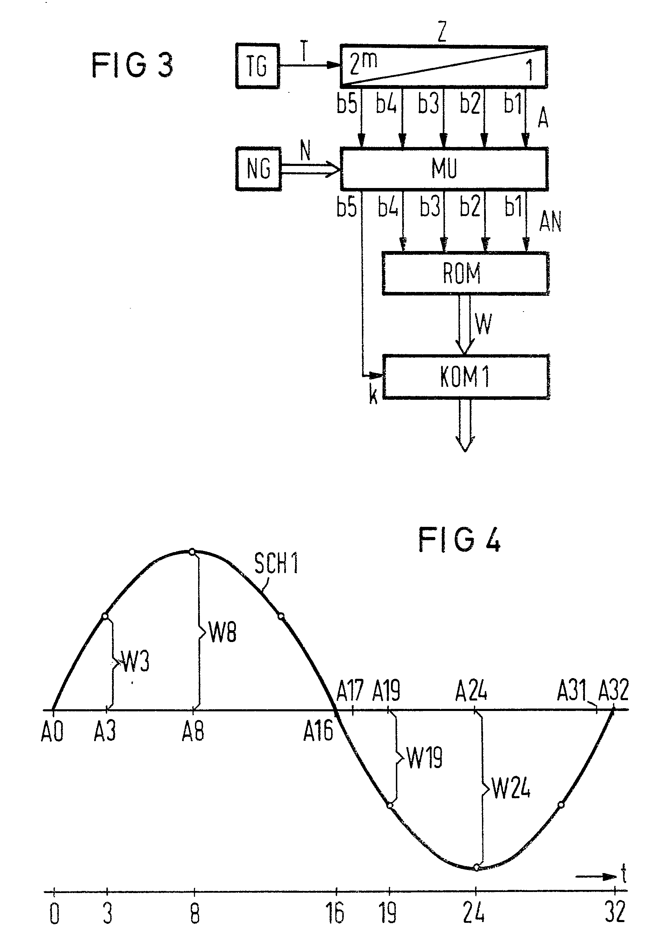

Wenn der Zähler Z den Zählerstand A1 abgibt, dann ist das multiplikative Signal AN unter den gemachten Voraussetzungen gleich dem Zählerstand A1 und der Festwertspeicher ROM gibt den Funktionswert W1 ab. Bei Vorliegen des Zählerstandes A2 wird der Zählerstand W2 abgegeben, beim Zählerstand A3 der Funktionswert W3. Auf diese Weise ergeben sich die Punkte P1, P2, P3 der Grundschwingung SCH1. Bei Abgabe des Zählerstandes A8 ergibt sich als positiver Scheitelwert der Grundschwingung SCH1 der Funktionswert W8. Zur Zeit t=16 ergibt sich bei einem Zählerstand A16 der Nulldurchgang der Grundschwingung. Wie die Fig. 4 zeigt, ergibt sich zur Zeit t=24 beim Zählerstand A24 der Funktionswert W24 als negativer Scheitelwert und zur Zeit t=32 ergibt sich beim Zählerstand A32 der zweite Nulldurchgang der G Grundschwingung. Die Funktionswerte W werden auf digitale Weise über mehrere Leitungen von dem in Fig. 1 dargestellten Festwertspeicher ROM abgegeben. Bei dem anhand der Fig. 2 und 4 dargestellten Ausführungsbeispiel wurde angenommen, daß die Grundschwingung SCH1 eine Sinusschwingung ist. Pro Periode der in Fig. 4 dargestellten Sinusschwingung werden also $p=2^m=2^5=32$ Zählerstände AO bis A31 abgegeben.

Mit N=1 wurde bisher die Erzeugung der einzelnen Funktionswerte W der Grundschwingung SCH1 beschrieben. Nunmehr wird angenommen, daß die Zahl N eine Binärzahl mit dem Zahlenwert 2 darstellt. Der Multiplizierer MU multipliziert modulo p=32 alle Zählerstände A mit dem Faktor 2. Bei Ausgabe des Zählerstandes A1 ergibt sich unter dieser Voraussetzung das multiplikative Signal AN=00010, das dem Zählerstand A2 gleicht und die Ausgabe des Funktionswertes W2 zur Folge hat. Der Funktionswert W2 wird daher bereits zur Zeit t=1 erzeugt und nicht erst zur Zeit t=2. Zur Zeit t=2 wird der Zählerstand A2 ausgegeben. Durch Multiplikation mit dem Faktor 2 ergibt sich das multiplikative Signal AN=00100, das dem Zählerstand A4 gleicht und die Ausgabe des Funktionswertes W4 zur Folge hat. Der Funktionswert W4 wird nunmehr bereits zur Zeit t=2 ausgegeben und nicht zur Zeit t=4. Auf diese Weise ergeben sich anstelle der Punkte P2 bzw. P4 die Punkte P2' bzw. P4' und anstelle der Grundschwingung SCH1 ergibt sich die Schwingung SCH2. Mit N=2 hat die Schwingung SCH2 die zweifache Frequenz gegenüber der Grundschwingung SCH1. Der erste Nulldurchgang der Schwingung SCH2 erfolgt bereits zum Zeitpunkt t=8 und der zweite Nulldurchgang erfolgt zum Zeitpunkt t16.

Wenn der 1/4 Periode der Grundschwingung SCH1 die acht Funktionswerte W1 bis W8 zugeordnet sind, dann sind der 1/4 Periode der Schwingung SCH2 mit N=2 nur mehr die vier Funktionswerte W2, W4, W6, W8 zugeordnet. Allgemein entsprechen p Funktionswerte der Grundschwingung p/N Funktionswerte der erzeugten Schwingung mit der N-fachen Frequenz. Um die Schwingung mit der N-fachen Frequenz noch vollständig zu bestimmen, müssen mindestens zwei Funktionswerte pro Periode erzeugt werden. Die Anzahl $p=2^m$ der Grundschwingung-Funktionswerte muß also mindestens gleich der Zahl 2N sein.

Die modulo p Multiplikation wird mit einem bekannten Multiplizierer MU einfach dadurch bewerkstelligt, daß der sich bei der Multiplikation der Zahlen A und N eventuell ergebende Überlauf nicht berücksichtigt wird. Bei vorliegendem Ausführungsbeispiel wird A und N modulo 32 multipliziert. Es ergibt sich beispielsweise durch die Multiplikation A19 . N mit A19 = 10011 und N = 00010 das Produkt 100110 von dem die unterstrichene 1 als Überlauf nicht berücksichtigt wird, so daß sich A19 . N mod 32 = 00110 = A6 ergibt.

Mit N=1/2 wird nunmehr angenommen, daß der Multiplizierer MU die Zählerstände A mit dem Faktor 1/2 multipliziert. Zur Zeit t=4 wird beispielsweise der Zählerstand A4 abgegeben und durch Multiplikation mit 1/2 ergibt sich das multiplikative Signal AN=00010. Dieses multiplikative Signal ist gleich dem Zählerstand A2 und bewirkt die Abgabe des Funktionswertes W2. Auf diese Weise ergibt sich zur Zeit t=4 der Punkt P2". In ähnlicher Weise ergibt sich zur Zeit t=8 der Punkt P4" und in weiterer Folge die Schwingung SCH1/2. Mit N=1/2 ist die Frequenz der Schwingung SCH1/2 nur halb so groß wie die Frequenz der Grundschwingung SCH1. Mit Hilfe der in Fig. 1 dargestellten Schaltungsanordnung lassen sich somit zeitlich nacheinander die Funktionswerte von Schwingungen erzeugen, deren Folgefrequenzen N-fache der Grundschwingung SCH1 sind. Je größer die Zahl m gewählt wird, desto größer ist die Zahl $2^m$, der pro Periode der Grundschwingung SCH1 abgegebenen Zählerstände A und desto geringer sind die Abstände der einzelnen Punkte P1, P2, P3, P4 der Grundschwingung SCH1. Auf diese Weise wird die Genauigkeit in Abszissenrichtung erhöht. Je genauer die Funktionswerte W1, W2, W3, W4 im Festwertspeicher ROM gespeichert sind, umso mehr wird die Genauigkeit der Grundschwingung SCH1 in Ordinatenrichtung erhöht.

Gemäß Fig. 3 sind nur die Ausgänge des Multiplizierers MU für die Binärstellen b1 bis b4 an den Festwertspeicher ROM angeschlossen. Auf diese Weise werden vom Festwertspeicher ROM für die positiven und negativen Halbwellen je die gleichen Funktionswerte erzeugt. Die Vorzeichen dieser Funktionswerte werden mit Hilfe der Stelle b5 berücksichtigt.

Gemäß Fig. 4 werden mit N=1 beispielsweise die Funktionswerte W3, W8, W19, W24 erzeugt. Der Festwertspeicher ROM gibt zur Zeit t=3 und zur Zeit t=19 Funktionswerte ab, die sich nur durch unterschiedliche Vorzeichen unterscheiden. Diese Vorzeichen der Funktionswerte W3 und W19 werden durch die Stelle b5 berücksichtigt. In ähnlicher Weise werden die unterschiedlichen Vorzeichen der Funktionswerte W8 und W24 durch die Stelle b5 berücksichtigt. Die in Fig. 3 dar-

gestellte Komplementärstufe KOM1 ist grundsätzlich nicht erforderlich, falls die Beträge der Funktionswerte mit den Ausgangssignalen des Festwertspeichers ROM und die Vorzeichen der Funktionswerte mit Hilfe des einen Bit der Stelle b5 signalisiert werden.

Falls negative Funktionswerte durch ihr Komplement dargestellt werden sollen, dann ist die an sich bekannte Komplementstufe KOM1 erforderlich, der über den Eingang k das Binärsignal der Stelle b5 zugeführt wird. Mit b5=0 werden die der Komplementstufe eingangs zugeführten Funktionswerte W nicht geändert. Mit b5=1 wird das Komplement zum zugeführten Funktionswert gebildet und über den Ausgang der Komplementstufe KOM1 abgegeben.

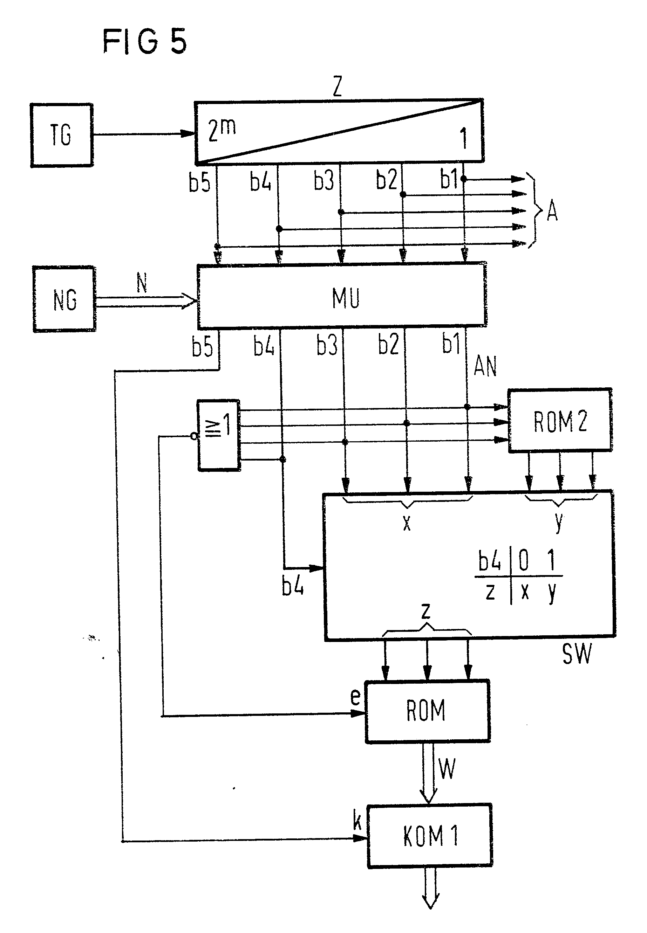

Gemäß Fig. 5 werden je die gleichen Funktionswerte erzeugt, gleichgültig, ob diese Funktionswerte zum ersten, zweiten, dritten oder vierten Viertel der Schwingung gehören. Fig. 2 zeigt, daß die Summe der Zählerstände A7 und A9 den Zähler- stand $A16=2^{m-1}$ ergibt. In ähnlicher Weise ergibt auch die Summe der Zählerstände A6 und A10, ferner die Summe der Zählerstände A5 und A11 und die Summe der Zählerstände A4 und A12 den Zählerstand A16. Die Zählerstände A1 bis A15 der positiven Halbwelle sind also paarweise komplementär zueinander in bezug auf die Zahl 10000. In ähnlicher Weise sind die Zählerstände A17 bis A31 der negativen Halbwelle paarweise komplementär zueinander in bezug auf die Zahl $2^{m-1}=16$. Es ist also nicht erforderlich, zwischen Zählerständen der positiven bzw. negativen Halbwelle zu unterscheiden, so daß je die Binärstellen b1, b2, b3 der Zähler- stände A1 bis A15 und A17 bis A31 paarweise zueinander komplementär sind in bezug auf die Zahl $2^{m-2}=8$. Da der Multiplizierer MU modulo p multipliziert, gelten diese Ausführungen auch für die Zahlen, die mit den multiplikativen Signalen signalisiert werden.

Mit A = A2 = 00010, N = 00010 und mit m = 5 ergibt sich beispielsweise A2N = 00100. A2N ist komplementär zu A6N = 01100, weil 00100 + 01100 = 10000 ist. Wenn nur die letzten drei Stellen berücksichtigt werden, ergibt sich 100 + 100 = 1000 = $2^{m-2}$.

Dem Festwertspeicher RoM2 werden laufend die Binärwerte b1, b2, b3 der multiplikativen Signale AN als Adressen eingegeben. Über die Ausgänge des Festwertspeicher RoM2 werden die entsprechenden Komplemente abgegeben. An den Eingängen x und y des Schalters SW liegen daher die aus der Tabelle 1 ersichtlichen Signale. Anstelle des Festwertspeichers RoM2 könnte auch eine Subtraktionsstufe verwendet werden, welche in Abhängigkeit vom multiplikativen Signal die entsprechenden Komplemente abgibt.

| x | y |
|-----|-----|
| 000 | 000 |
| 001 | 111 |
| 010 | 110 |
| 011 | 101 |
| 100 | 100 |
| 101 | 011 |
| 110 | 010 |
| 111 | 001 |

Tabelle 1

Dem Schalter SW werden laufend über die Eingänge x die multiplikativen Signale des Multiplizierers MU und über die Eingänge y die zugehörigen Komplemente zugeführt. In Abhängigkeit von der Binärstelle b4 werden entweder die Eingänge x oder die Einägnge y mit den Ausgängen z verbunden. Insbesondere werden mit b4=0 die Eingänge x mit den Ausgängen z verbunden. Auf diese Weise werden die Funktionswerte W1-W7 und W17-W23 erzeugt. Mit b4=1 werden die Eingänge y mit den Ausgängen z verbunden und auf diese Weise werden die Funktionswerte W8-W15 und W24-W31 erzeugt.

Der Festwertspeicher ROM gibt nur dann die gespeicherten Festwerte ab, wenn am Eingang e ein O-Wert anliegt, der mit Hilfe des Gliedes NOR gewonnen wird. Ein O-Wert liegt immer dann vor, wenn eine der Binärstellen b1, b2, b3, b4 des Signals AN gleich dem Binärwert 1 ist. Dies ist der Fall bei der Erzeugung der Funktionswerte W1 bis W15 und W17 bis W31.

Falls am Glied NOR die Signale 0000 anliegen, ergibt sich ein 1-Wert am Eingang e des Festwertspeichers ROM, der dann den Funktionswert WO=W16 abgibt.

In Abhängigkeit von der Binärstelle b5 wird ähnlich wie im Fall der Fig. 3 das Vorzeichen der Funktionswerte signalisiert. Grundsätzlich wären die Ausgangssignale des Festwertspeichers ROM und die Binärstelle b5 völlig ausreichend, um alle Funktionswerte der zu erzeugenden Schwingungen vorzeichenrichtig zu signalisieren. Ähnlich wie gemäß Fig. 3 können auch gemäß Fig. 5 negative Funktionswerte durch die entsprechenden Komplemente signalisiert werden. Dazu dient die Komplementstufe KOM1, die mit b5=O keine Komplementbildung veranlaßt, aber mit m5=1 die jeweiligen Komplemente bildet.

Bei dem in Fig. 1 dargestellten Ausführungsbeispiel gibt der Festwertspeicher ROM pro Schwingungsperiode alle Funktionswerte ab. Es sind dies $2^m$ Funktionswerte. Dieses Ausführungsbeispiel wird zweckmäßig immer dann angewendet, wenn ein Festwertspeicher ROM mit genügend vielen Speicherzellen zur Verfügung steht. Bei dem in Fig. 3 dargestellten Ausführungsbeispiel gibt der Festwertspeicher ROM nur die Funktionswerte für eine Halbwelle der Schwingungen ab. Es sind dies $2^{m-1}$ Funktionswerte. Es ist zweckmäßig, dieses in Fig. 3 dargestellte Ausführungsbeispiel dann anzuwenden, wenn der Aufwand für die Berücksichtigung des Vorzeichens der Funktionswerte durch die Einsparung an Speicherplätzen im Festwertspeicher ROM gerechtfertigt ist. Beim Ausführungsbeispiel gemäß Fig. 5 werden im Festwertspeicher ROM nur Speicherplätze für die Funktionswerte eines Quartals der Schwingungen benötigt. Es sind dies $2^{m-2}$ Funktionswerte und entsprechende Speicherplätze. Die Anwendung des in Fig. 5 dargestellten Ausführungsbeispiels ist dann zweckmäßig, wenn die Einsparung der Speicherplätze im Festwertspeicher ROM den Aufwand zur Berücksichtigung der Funktionswerte verschiedener Quartale und verschiedener Halbwellen der Schwingungen rechtfertigt.

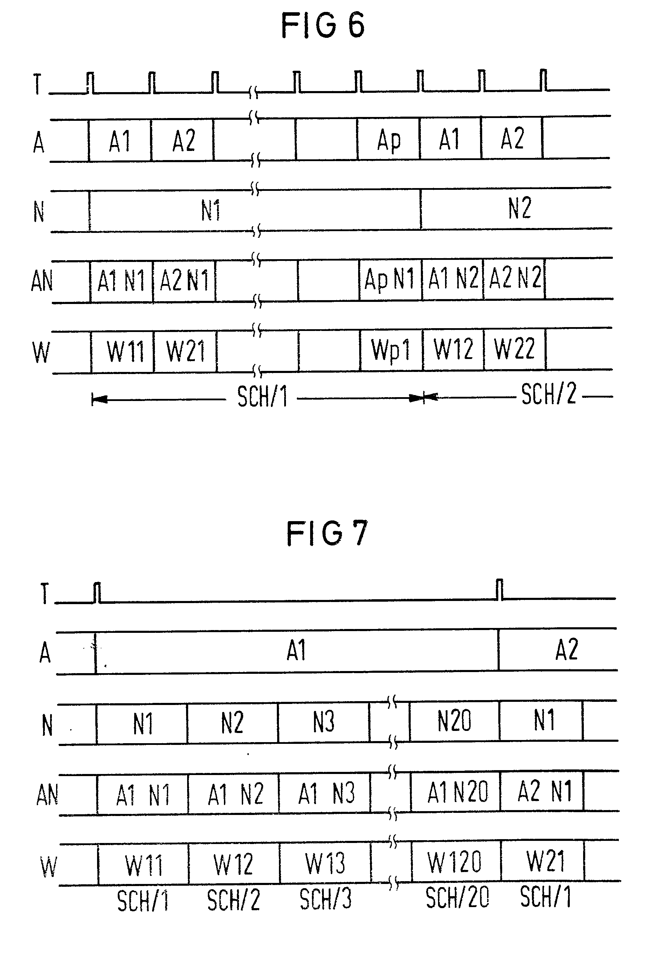

Die Figuren 6 und 7 zeigen, in welcher Weise die Funktionswerte W zeitlich nacheinander erzeugt werden. Gemäß Fig. 6 werden die Zählerstände A ausgegeben, wie bereits anhand der Figuren 1 und 2 beschrieben wurde. Während der Ausgabe der ersten p Zählerstände A1 bis Ap hat die Zahl N den Wert N1. Damit ergeben sich die multiplikativen Signale A1N1, A2N1, .... ApN1. Entsprechend diesen multiplikativen Signalen werden die Funktionswerte W11, W21 ... Wp1 abgegeben. Nach dem Zählerstand Ap wird wieder mit dem Zählerstand A1 begonnen. Beginnend mit A1 wird aber nun die Zahl N2 abgegeben, so daß die multiplikativen Signale A1N2, A2N2 .... gebildet werden und die entsprechenden Funktionswerte W12, W22 usf. Dabei gehören die Funktionswerte W11, W21 bis Wp1 zur Schwingung SCH/1, wogegen die Funktionswerte W12, W22 zu einer anderen Schwingung SCH/2 gehören.

Fig. 7 zeigt eine andere sequentielle Folge von Funktionswerten. Die Taktimpulse T sind im Vergleich zur Fig. 5 in vergrößertem Maßstab dargestellt. Wie bisher, werden zwischen je zwei Impulsen T die Zählerstände eingestellt, beispielsweise die Zählerstände A1 und A2. Während der Ausgabe des Zählerstandes A1 werden aber nun die Signale N1, N2, N3 ... N20 mit Hilfe des in den Figuren 1 , 3 und 5 dargestellten Generators NG erzeugt. Auf diese Weise werden die multiplikativen Signale A1N1, A2N2, A1N3 ... A1N20 gebildet. Entsprechend diesen multiplikativen Signalen ergeben sich die Funktionswerte W11, W12, W13 ... W120. Während der Ausgabe des Zählerstandes A2 wird ähnlich verfahren. Es wird also zunächst der Wert N1 abgegeben und das multiplikative Signal A2N1 erzeugt, dem der Funktionswert W21 entspricht. Aufeinanderfolgende Funktionswerte W11, W12, W13 ... W120 gehören zu verschiedenen Schwingungen SCH/1, SCH/2, SCH/3 ... SCH/20. Erst mit dem Funktionswert W21 wird nach dem Funktionswert W11 ein zweiter Funktionswert der Schwingung SCH/1 erzeugt.

Die Erzeugung der Funktionswerte gemäß Fig. 6 ist immer dann zweckmäßig, wenn aus diesen Funktionswerten etwa mit Hilfe eines Digital-Analog-Wandlers und eines Tiefpasses ein Zeitsignal erzeugt werden soll, das der Schwingung SCH/1 weitgehend gleicht. Auf diese Weise ergeben sich zeitlich nacheinander Zeitsignale, welche den Schwingungen SCH/1, SCH/2 usf. gleichen.

Die Erzeugung der Funktionswerte gemäß Fig. 7 ist dann zweckmäßig, wenn ein Summensignal erzeugt werden soll, das die Summe der Schwingungen SCH/1 bis SCH/20 signalisiert. Dies deshalb, weil gemäß Fig. 7 die einzelnen Funktionswerte W11 bis W120 rasch aufeinander folgen, so daß sie zur Bildung eines Summensignals nur relativ kurzzeitig gespeichert werden müssen.

4 Patentansprüche

7 Figuren

0015424

- 13 -   VPA   79 P 2 3 0 8 EUR

<u>Patentansprüche</u>

1. Schaltungsanordnung zur sequentiellen Erzeugung der Funktionswerte mehrerer Schwingungen, deren Folgefrequenzen N-fache einer Grundschwingung sind, **d a d u r c h   g e k e n n z e i c h n e t**, daß einem Zähler (Z) Taktimpulse (T) eines Taktgebers (TG) als Zählimpulse zugeführt werden und der Zähler (Z) periodisch eine Anzahl p von binär dargestellten Zählerständen (A) abgibt, daß mit einem Generator (NG) Binärsignale (N) erzeugt werden, welche die Zahlen N signalisieren, daß mit einem Multiplizierer (MU) multiplikative Signale (AN) erzeugt werden, die die Produkte der Zählerstände·(A) und der Zahlen N modulo p signalisieren, und daß einem Festwertspeicher (ROM) die multiplikativen Signale (AN) als Adressen zugeführt werden und der Festwertspeicher (ROM) die Funktionswerte (W) entsprechend den Adressen abgibt. (Fig. 1 und 2)

2. Schaltungsanordnung nach Anspruch 1, **d a d u r c h   g e k e n n z e i c h n e t**, daß der Zähler (Z) pro Periode der Grundschwingung $p=2^m$ Zählerstände (A) erzeugt, wobei die Zahl m eine positive ganze Zahl bedeutet, daß die Zählerstände (A) mit je m Binärsignalen signalisiert werden, die je den einzelnen Binärstellen der Zählerstände (A) zugeordnet sind und daß die Anzahl p mindestens gleich der Zahl 2N ist. (Fig. 2)

3. Schaltungsanordnung nach Anspruch 1 und 2 zur Erzeugung der Funktionswerte mehrerer Sinusschwingungen, deren Frequenzen das N-fache einer Sinusgrundschwingung sind, **d a d u r c h   g e k e n n z e i c h n e t**, daß mit dem Multiplizierer (MU) multiplikative Signale (AN) erzeugt werden, die die Produkte der m-1 niederwertigeren Binärstellen (b1 bis b4) der Zählerstände (A) und der Zahl N signalisieren und daß die Polarität der vom Festwertspeicher (ROM) abgegebenen Funktionswerte (W) mit Hilfe der höchsten Binärstelle (b5) des multiplikativen Signals (AN) festgelegt wird. (Fig. 3 und 4)

4. Schaltungsanordnung nach Anspruch 1 und 2 zur Erzeugung der Funktionswerte mehrerer Sinusschwingungen, deren Frequenzen das N-fache einer Sinusgrundschwingung sind, d a d u r c h   g e k e n n z e i c h n e t , daß die multiplikativen Signale (AN) des Multiplizierers (MU) - die die Produkte der niederwertigeren m-2 Binärstellen (b1 bis b3) der Zählerstände (A) und der Zahl (N) signalisieren - einerseits einer ersten Serie von Eingängen (x) einer Schaltanordnung (SW) und andererseits einer Komplementärstufe (ROM2) zugeführt werden, daß die Komplementärstufe (ROM2) Signale an eine zweite Serie von Eingängen (y) der Schaltanordnung (SW) abgibt, welche das Komplement der eingangs zugeführten Signale in bezug auf jenen Zählerstand (A8) signalisiert, der einen der Scheitelwerte (W8, W24) der Sinusgrundschwingung (SCH1) zugeordnet ist, daß das Binärsignal der m-1-ten Binärstelle (b4) des multiplikativen Signals der Schaltanordnung (SW) als Steuersignal zugeführt ist und die leitende Verbindung der ersten bzw. zweiten Eingänge mit einer dritten Serie von Ausgängen (z) bewirkt, daß die dritte Serie von Ausgängen (z) der Schaltanordnung (SW) an den Festwertspeicher (ROM) angeschlossen ist und daß die Polarität der vom Festwertspeicher (ROM) abgegebenen Funktionswerte (W) mit Hilfe der höchsten Binärstelle (b5) des multiplikativen Signals (AN) festgelegt wird. (Fig. 5)

FIG 1

FIG 2

SCH 2

SCH 1/2

P4'   P4   P4''

P3

P2'   P2   P2''

W8

SCH1

P1

W3   W4   W6

W2

W1

A0 A1 A2 A3 A4 A5 A6 A7 A8 A9 A10 A11 A12 A13 A14 A15 A16

T

A

b5
b4
b3
b2
b1

0 1 2 3 4 5 6 7 8 9 10 11 12 13 14 15 16   t

FIG 3

FIG 4

**FIG 5**

## FIG 6

| T | ⎍ | ⎍ | ⎍ | ⟋⟍ | ⎍ | ⎍ | ⎍ | ⎍ | ⎍ |
|---|---|---|---|---|---|---|---|---|---|
| A | | A1 | A2 | | | Ap | A1 | A2 | |
| N | | | N1 | | | | | N2 | |
| AN | A1 N1 | A2 N1 | | | Ap N1 | A1 N2 | A2 N2 | |
| W | W11 | W21 | | | Wp1 | W12 | W22 | |

←———————— SCH/1 ————————→←——— SCH/2 ———

## FIG 7

| T | ⎍ | | | | | ⎍ |
|---|---|---|---|---|---|---|
| A | | A1 | | | | A2 |
| N | N1 | N2 | N3 | N20 | N1 |
| AN | A1 N1 | A1 N2 | A1 N3 | A1 N20 | A2 N1 |
| W | W11 | W12 | W13 | W120 | W21 |

SCH/1  SCH/2  SCH/3  SCH/20  SCH/1

0015424
Nummer der Anmeldung

Europäisches Patentamt

**EUROPÄISCHER RECHERCHENBERICHT**

EP 80 10 0761

| Kategorie | **EINSCHLÄGIGE DOKUMENTE** Kennzeichnung des Dokuments mit Angabe, soweit erforderlich, der maßgeblichen Teile | betrifft Anspruch | **KLASSIFIKATION DER ANMELDUNG (Int.Cl.3)** |
|---|---|---|---|
| | ELECTRONIC ENGINEERING, Band 50, Nr. 611, September 1978 London P.A. PAYNE et al. "Programmed generation of composite sine waves" Seiten 39 bis 42 * Seite 39; Fig. 2, 3 * -- | 1 | G 06 F 1/02 H 03 K 4/00 |
| | DE - A1 - 2 607 304 (SIEMENS) * Fig. 1 bis 4 * -- | 1 | |
| | DE - A - 2 151 281 (POST OFFICE) * Fig. 1 * -- | 1 | **RECHERCHIERTE SACHGEBIETE (Int. Cl.3)** G 06 F 1/02 H 03 B 1/00 H 03 K 4/00 |
| A | DE - A1 - 2 412 177 (SCHMIDT-VAHLEN-SIECK) * Fig. 1 * -- | | |
| A | DE - A - 2 231 458 (ROCKLAND SYSTEMS CORP.) * Fig. 1 bis 9 * -- | | |
| A | DE - A - 2 134 933 (STE LANNIONNAISE D'ELECTRONIQUE et al.) * Fig. 1 bis 7 * -- | | **KATEGORIE DER GENANNTEN DOKUMENTE** X: von besonderer Bedeutung A: technologischer Hintergrund O: nichtschriftliche Offenbarung P: Zwischenliteratur |
| A | DE - A - 1 935 306 (NORTH AMERICAN ROCKWELL CORP.) * Fig. 1 bis 12 * -- ./.. | | T: der Erfindung zugrunde liegende Theorien oder Grundsätze E: kollidierende Anmeldung D: in der Anmeldung angeführtes Dokument L: aus andern Gründen angeführtes Dokument &: Mitglied der gleichen Patentfamilie, übereinstimmendes Dokument |

X Der vorliegende Recherchenbericht wurde für alle Patentansprüche erstellt.

| Recherchenort | Abschlußdatum der Recherche | Prüfer |
|---|---|---|
| Berlin | 16-05-1980 | BREUSING |

EPA form 1503.1 06.78

Europäisches
Patentamt

EUROPÄISCHER RECHERCHENBERICHT

0015424
Nummer der Anmeldung

EP 80 10 0761
- Seite 2 -

## EINSCHLÄGIGE DOKUMENTE

| Kategorie | Kennzeichnung des Dokuments mit Angabe, soweit erforderlich, der maßgeblichen Teile | betrifft Anspruch |
|-----------|-----------------------------------------------------------------------------------|-------------------|
| A | ELEKTRONIK, Nr. 3, 1976<br>R.-D. KLEIN "Digitaler Sinusgenerator mit Festwertspeicher"<br>Seiten 92 bis 96<br><br>———— | |

**KLASSIFIKATION DER ANMELDUNG (Int.Cl.3)**

**RECHERCHIERTE SACHGEBIETE (Int. Cl.3)**